# EUROPEAN PATENT APPLICATION

(11) **EP 4 167 310 A1**
(43) Date of publication of application: **19.04.2023**
(21) Application number: 21823127.2
(22) Date of filing: 07.06.2021
(51) Int. Cl.: H01M 4/13, H01M 4/62, H01M 10/0562, H01B 1/06, H01B 1/08, H01B 1/10

(54) **SOLID ELECTROLYTE, ELECTRODE MIXTURE AND BATTERY**

(30) Priority: 10.06.2020 JP 2020100733
(71) Applicant: Mitsui Mining & Smelting Co., Ltd., Shinagawa-ku Tokyo 141-8584 (JP)
(72) Inventor: ITO, Takahiro, Ageo-shi, Saitama 362-0021 (JP)
(74) Representative: Novagraaf Technologies
(86) International application number: PCT/JP2021/021619
(87) International publication number: WO 2021/251347

(57) **Abstract**

A solid electrolyte contains at least elemental lithium (Li), elemental phosphorus (P), elemental sulfur (S), elemental halogen (X), and elemental oxygen (O), and has a crystalline phase with an argyrodite-type crystal structure. In the solid electrolyte, the molar ratio of the elemental halogen (X) to the elemental phosphorus (P), X/P, is more than 1.0 and less than 2.4, and the molar ratio of the elemental oxygen (O) to the elemental phosphorus (P), O/P, is more than 0 and less than 0.5. In an X-ray diffraction pattern, the solid electrolyte exhibits: peak A in the range of 2θ = 21.6° to 22.6°, peak B in the range of 2θ = 22.7° to 23.7°; and peak C in the range of 2θ = 35.8° to 36.8°, the X-ray diffraction pattern being obtained by an X-ray diffractometer (XRD) using CuKα1 radiation.

## Description

### Technical Field

The present invention relates to a solid electrolyte. The present invention also relates to an electrode material mixture and a battery containing the solid electrolyte.

### Background Art

Various sulfide materials are known as solid electrolytes with lithium ionic conductivity. For example, Non-Patent Literature 1 discloses use of oxygen-doped Li₆PS₅Br, that is, Li₆PS_{5-X}OXBr (0≤x≤1) as a solid electrolyte. According to the description of this literature, the doping of Li₆PS₅Br with oxygen suppresses generation of dendrite, thereby improving the electrochemical stability and the chemical stability. Furthermore, according to the description of this literature, Li₆PS_{5-X}OXBr has an argyrodite phase as its main crystalline phase, and, if the amount of oxygen serving as a dopant is within a certain level, the oxygen substitutes sulfur sites in the argyrodite phase so that the above-described effects can be obtained. It is further disclosed that, if the amount of oxygen serving as a dopant is more than the substitutable level, lithium phosphate and lithium bromide, which are impurities, are generated to decrease the ionic conductivity, and that thus the generation of lithium phosphate and lithium bromide as impurities should be avoided.

### Citation List

### Non-Patent Literature

Non-Patent Literature 1: Journal of Power Sources 410-411 (2019) 162-170.

### Summary of Invention

Various studies have been conducted on solid electrolytes with high lithium ionic conductivity as described in Non-Patent Literature 1 above, for example. Meanwhile, in recent years, there is a need for solid electrolytes that has lithium ionic conductivity and is also capable of exhibiting excellent battery characteristics when used for solid-state batteries. Accordingly, it is an object of the present invention to provide a solid electrolyte that has lithium ionic conductivity and is also capable of exhibiting excellent battery characteristics when used for a solid-state battery.

The present invention provides a s solid electrolyte comprising at least elemental lithium (Li), elemental phosphorus (P), elemental sulfur (S), elemental halogen (X), and elemental oxygen (O),
wherein the solid electrolyte has a crystalline phase with an argyrodite-type crystal structure,
a molar ratio of the elemental halogen (X) to the elemental phosphorus (P), X/P, is more than 1.0 and less than 2.4,
a molar ratio of the elemental oxygen (O) to the elemental phosphorus (P), O/P, is more than 0 and less than 0.5, and
in an X-ray diffraction pattern, the solid electrolyte exhibits:
   peak A in a range of 2θ = 21.6° to 22.6°;
   peak B in a range of 2θ = 22.7° to 23.7°; and
   peak C in a range of 2θ = 35.8° to 36.8°,
the X-ray diffraction pattern being obtained by an X-ray diffractometer using CuKα1 radiation.

### Brief Description of Drawings

[Fig. 1] Fig. 1 is a graph showing an X-ray diffraction pattern of a solid electrolyte obtained in Example 2.
[Fig. 2] Fig. 2 is a graph showing an X-ray diffraction pattern of a solid electrolyte obtained in Example 4.
[Fig. 3] Fig. 3 is a graph showing an X-ray diffraction pattern of a solid electrolyte obtained in Comparative Example 1.

### Description of Embodiment

Hereinafter, the present invention will be described based on preferred embodiments thereof. The solid electrolyte of the present invention contains at least elemental lithium (Li), elemental phosphorus (P), elemental sulfur (S), elemental halogen (X), and elemental oxygen (O). The solid electrolyte of the present invention is typically a sulfide solid electrolyte. The solid electrolyte of the present invention containing these elements is preferably a crystalline compound. A crystalline compound refers to a substance that exhibits a diffraction peak assigned to a crystalline phase when analyzed by X-ray diffractometry (hereinafter, also referred to as "XRD"). In particular, the solid electrolyte preferably has a crystalline phase with an argyrodite-type crystal structure, in view of increasing the lithium ionic conductivity of the solid electrolyte.

An argyrodite-type crystal structure refers to a crystal structure of a family of compounds derived from a mineral represented by the chemical formula Ag₈GeS₆. Whether or not a solid electrolyte of the present invention has a crystalline phase with an argyrodite-type crystal structure can be determined by XRD, for example. For example, in a diffraction pattern obtained by XRD using CuKα1 radiation, a crystalline phase with an argyrodite-type crystal structure exhibits characteristic diffraction peaks at 2θ = 15.3° ± 1.0°, 17.7° ± 1.0°, 25.2° ± 1.0°, 30.0° ± 1.0°, 30.9° ± 1.0°, and 44.3° ± 1.0°. Furthermore, depending on the element species constituting the solid electrolyte, the crystal phase may also exhibit characteristic diffraction peaks at 2θ = 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, in addition to the above-mentioned diffraction peaks. For example, data of PDF No. 00-034-0688 can be used to identify diffraction peaks assigned to an argyrodite-type crystal structure.

In the solid electrolyte of the present invention, the molar ratio of the elemental halogen (X) to the elemental phosphorus (P), X/P, is a relatively high value. Specifically, the molar ratio X/P is preferably more than 1.0 and less than 2.4. A solid electrolyte having a molar ratio X/P within the above-mentioned range and further exhibiting XRD peaks, which will be described later, has satisfactory lithium ionic conductivity and also provides excellent battery characteristics when used for a solid-state battery. In view of making this advantage more remarkable, the molar ratio X/P is preferably 1.2 or more, and more preferably 1.4 or more, for example. On the other hand, the molar ratio X/P is preferably 2.2 or less, more preferably 2.0 or less, and even more preferably 1.6 or less, for example. The molar ratio X/P can be determined by ICP optical emission spectroscopy, for example. The details of ICP optical emission spectroscopy can be the same as those described in "Examples", which will be described later, and thus a description of the detail is omitted here.

Examples of the elemental halogen (X) that is one of the elements constituting the solid electrolyte include elemental fluorine (F), elemental chlorine (Cl), elemental bromine (Br), and elemental iodine (I). The elemental halogen (X) may be one of these elements or may be a combination of two or more of these elements. In view of facilitating the formation of an argyrodite-type crystal structure through a solid state reaction, which will be described later, to increase the lithium ionic conductivity, the solid electrolyte may contain at least elemental chlorine (Cl) as the elemental halogen (X), or may contain elemental bromine (Br) and elemental chlorine (Cl) as the elemental halogen (X). In view of further increasing the lithium ionic conductivity, the solid electrolyte may contain at least elemental iodine (I) as the elemental halogen (X), or the elemental halogen (X) may be elemental iodine (I).

In the case where the solid electrolyte contains elemental bromine (Br) and elemental chlorine (Cl) as the elemental halogen (X), the ratio of the number of moles of elemental bromine (Br) to the total number of moles of elemental bromine (Br) and elemental chlorine (Cl), that is, the value of Br/(Br+Cl) is preferably 0.2 or more, more preferably 0.3 or more, and even more preferably 0.4 or more, for example. On the other hand, the value of Br/(Br+Cl) is preferably 0.8 or less, more preferably 0.7 or less, and even more preferably 0.6 or less, for example.

In the case where bromine (Br) is introduced, the argyrodite-type crystal structure is easily formed; however, since bromine (Br) has a larger ionic radius than chlorine (Cl) and sulfur (S), it is conceivable that the amount of halogen dissolved in the argyrodite-type crystal structure will be small. For this reason, the appropriate adjustment of Br/(Br+Cl) as described above enables an increase in the amount of elemental halogen dissolved in the argyrodite-type crystal structure while easily forming the argyrodite-type crystal structure. As a result, the lithium ionic conductivity of the solid electrolyte can be increased even more. An increase in the amount of halogen dissolved in the argyrodite-type crystal structure corresponds to a decrease in the occupancy of lithium sites in the crystal structure, which probably results in an improvement of the lithium ionic conductivity.

When analyzed by XRD, the solid electrolyte of the present invention provides X-ray diffraction patterns different from those of conventionally known solid electrolytes. Specifically, the solid electrolyte of the present invention exhibits a peak in the range of 2θ = 21.6° to 22.6° (peak A), a peak in the range of 2θ = 22.7° to 23.7° (peak B), and a peak C in the range of 2θ = 35.8° to 36.8° (peak C), in an X-ray diffraction pattern obtained by XRD using CuKα1 radiation.

Here, "exhibit a peak" means exhibiting a peak having a peak top within a predetermined range of 2θ. "Peak top" means the top of a peak at which the intensity has a local maximum.

As for the peak A, one or more peaks having a peak top in the range of 2θ = 21.6° to 22.6° are exhibited. As for the peak B, one or more peaks having a peak top in the range of 2θ = 22.7° to 23.7° are exhibited. As for the peak C, one or more peaks having a peak top in the range of 2θ = 35.8° to 36.8°are exhibited.

A solid electrolyte exhibiting the peaks A, B, and C in an X-ray diffraction pattern obtained by XRD and further having the above-described molar ratio X/P has satisfactory lithium ionic conductivity, and, when it is used for a solid-state battery, the resulting solid-state battery exhibits excellent battery characteristics.

The peaks A, B, and C are not diffraction peaks assigned to the argyrodite-type crystal structure, but rather are diffraction peaks assigned to a substance with another crystal structure. The inventor of the present invention considers that this substance reduces the interface resistance between the solid electrolyte and the active material, and that when the solid electrolyte of the present invention is used for a solid-state battery, the resulting solid-state battery will thus exhibit excellent battery characteristics.

A solid electrolyte exhibiting the peaks A, B, and C in an X-ray diffraction pattern obtained by XRD is preferably produced using a method described later. In that method, a solid electrolyte produced also contains elemental oxygen (O) since a compound containing elemental oxygen (O) is used as a starting material. That is to say, the solid electrolyte of the present invention contains not only elemental lithium (Li), elemental phosphorus (P), elemental sulfur (S), and elemental halogen (X), but also elemental oxygen (O). The state of the elemental oxygen (O) in the solid electrolyte is not clear at present. Without being bound by theory, the inventor of the present invention presumes that: (i) the elemental oxygen (O) is contained in a substance to which the peaks A, B, and C are assigned; (ii) the elemental oxygen (O) substitutes for elemental sulfur (S) in the argyrodite-type crystal structure; or both (i) and (ii).

In the case of (i), it is considered that, when the solid electrolyte of the present invention is used for a solid-state battery, the solid-state battery exhibits excellent battery characteristics due to a substance to which the peaks A, B, and C are assigned. Although it is a matter of speculation as to what this substance is, the inventor of the present invention believes that this substance may be lithium phosphate (Li₃PO₄) taking into account the later-described suitable method for producing a solid electrolyte. It is known that one of the issues of solid-state batteries is that high-resistance materials are produced at the interface when the non-sulfide active material and the sulfide solid electrolyte come into contact and react with each other, which increases the interface resistance of the battery. It is believed that lithium phosphate present in the solid electrolyte acts as an auxiliary agent to suppress the production of such high-resistance materials while ensuring the contact between the active material and the sulfide solid electrolyte, thereby reducing the interface resistance between the solid electrolyte and the active material to result in excellent battery characteristics of the solid-state battery. Furthermore, it is considered that the presence of lithium phosphate between sulfide solid electrolyte particles contributes to improving the lithium ionic conductivity of the solid electrolyte since lithium phosphate itself has lithium ionic conductivity.

One example of a suitable approach to the achieving of the mechanism described above is to uniformly disperse fine lithium phosphate particles at a certain ratio in solid electrolyte particles. A preferred approach is to precipitate lithium phosphate as a byproduct of a solid state reaction to thereby form a solid electrolyte-lithium phosphate composite, as in the later-described method for producing a solid electrolyte. This approach allow fine lithium phosphate particles to disperse uniformly in solid electrolyte particles.

In the case of (ii), it is considered that when the solid electrolyte is used for a solid-state battery, the solid-state battery exhibits excellent battery characteristics while the solid electrolyte has satisfactory lithium ionic conductivity due to a mixed anion effect caused by the substitution of elemental oxygen (O) for elemental sulfur (S).

The advantages of the present invention described above are particularly remarkable when the molar ratio of the elemental halogen (X) to the elemental phosphorus (P), X/P, is high. As described above, for improving lithium ionic conductivity, it is necessary to increase the amount of halogen dissolved in the argyrodite-type crystal structure. For this purpose, it is conceivable, for example, that when producing a solid electrolyte through a solid state reaction in which prescribed starting materials are mixed and fired, the proportion of lithium halide in the lithium compound as a starting material is increased to increase the amount of halogen dissolved in the argyrodite-type crystal structure. However, since lithium halide is more crystalline and harder than other starting materials, lithium halide is difficult to uniformly disperse by mechanical mixing difficult. As a result, it is not easy to dissolve a sufficient amount of halogen in the argyrodite-type crystal structure through a solid state reaction, and unreacted lithium halide may remain as a different phase.

On the other hand, in the present invention, a certain amount of elemental oxygen (O) is contained in the starting material and the resulting solid electrolyte, to facilitate the dissolving of halogen in the argyrodite-type crystal structure through a solid state reaction, and thus the effect of reducing the amount of unreacted lithium halide, that is, a different phase, is exhibited. Although the mechanism thereof is not clear, the inventor surmises the following.

It is known as a mechanism of a solid state reaction in the firing process that an Li₃PS₄ structure, which is the basic skeleton of the argyrodite-type crystal structure, is formed first, and then sulfur and halogen are incorporated to form the argyrodite-type crystal structure. However, as the proportion of lithium halide in the starting material is increased, the amount of lithium sulfide is relatively small, and the proportion of elemental sulfur (S) in the total thus decreases. As a result, before halogen is incorporated, the Li₃PS₄ structure collapses to change into a stable structure such as an Li₄P₂S₇ structure or an Li₄P₂S₆ structure, and halogen that is not dissolved remains as lithium halide, which is a different phase. On the other hand, if a certain amount of elemental oxygen (O) is present in the starting material, part of the elemental oxygen (O) is bound to elemental phosphorus (P) to form an Li₃PO₄ structure and the like, and thus, changing of the Li₃PS₄ structure into the Li₄P₂S₇ structure or the Li₄P₂S₆ structure is suppressed even in a state in which elemental sulfur (S) is insufficient. Furthermore, oxides, such as lithium phosphate, as a byproduct are expected to act as a sintering aid to facilitate the diffusion of substances such as elemental halogen and elemental sulfur (S) and also to facilitate the solid state reaction.

In the solid electrolyte of the present invention, the molar ratio of the elemental oxygen (O) to the elemental phosphorus (P), O/P, may be more than 0, more than 0.11, more than 0.17, or more than 0.19, for example. On the other hand, the molar ratio O/P may be less than 0.5, 0.47 or less, or 0.45 or less, for example. If the solid electrolyte of the present invention has a molar ratio O/P as described above, a resulting solid-state battery exhibits excellent battery characteristics when the solid electrolyte is used for the solid-state battery.

The molar quantity of elemental oxygen (O) in the molar ratio O/P can be measured using inert gas fusion-infrared absorption or gas chromatography, for example. Among these methods, the inert gas fusion-infrared absorption is widely used because of its simplicity and high accuracy. The molar quantity of elemental P is measured using ICP optical emission spectroscopy.

As described above, the presence of the substance exhibiting the peaks A, B, and C is considered to be one of the factors that allow the solid-state battery to exhibit excellent battery characteristics. However, since the substance is of a phase different from the crystalline phase with the argyrodite-type crystal structure, its presence in large amounts may reduce the lithium ionic conductivity derived from the crystalline phase with the argyrodite-type crystal structure. Thus, in the present invention, the ratio of I_{A} to I_{M}, I_{A}/I_{M}, is preferably less than 0.03, more preferably 0.025 or less, and even more preferably 0.02 or less, in an X-ray diffraction pattern obtained by XRD using CuKα1 radiation, wherein I_{M} represents the intensity of the peak exhibited in the range of 2θ = 24.2° to 26.2° (peak M) (this peak is assigned to the argyrodite-type crystal structure as described above) and I_{A} represents the intensity of the peak B. Since the intensity of a diffraction peak in XRD is generally proportional to the amount of the substance, the ratio I_{A}/I_{M} within the above-mentioned range means that the amount of the phase different from the crystalline phase with the argyrodite-type crystal structure is relatively lower than the amount of crystalline phase with the argyrodite-type crystal structure. Meanwhile, the value of the ratio I_{A}/I_{M} can be selected as appropriate as long as the intended effects of the present invention are obtained, and it is preferably more than 0, and more preferably 0.005. The reason why the peak M exhibited in the range of 2θ = 24.2° to 26.2° was focused on out of the various peaks assigned to the argyrodite-type crystal structure is that the peak M is one of the peaks that rank first or a similar level in terms of the intensity.

Whereas the description above is for the peak A, the following is preferable for the peak B and the peak C for the same reasons as described for the peak A.

The ratio of I_{B} to I_{M}, I_{B}/I_{M}, is preferably 0.025 or less, more preferably 0.02 or less, and even more preferably 0.015 or less, wherein I_{B} represents the intensity of the peak B and I_{M} represents the intensity of the peak M.

The ratio of Ic to I_{M}, I_{C}/I_{M}, is preferably 0.012 or less, more preferably 0.011 or less, and even more preferably 0.01 or less, wherein Ic represents the intensity of the peak C and I_{M} represents the intensity of the peak M.

The values of the ratios I_{B}/I_{M} and I_{C}/I_{M} can be selected as appropriate as long as the intended effects of the present invention are obtained. Specifically, the ratio I_{B}/I_{M} is preferably more than 0, and more preferably 0.002 or more, and the ratio I_{C}/I_{M} is preferably more than 0, and more preferably 0.001 or more.

I_{A}, I_{B}, Ic, and I_{M} described above are the areas (i.e., integrated intensities) of the peaks A, B, C and M, respectively, in the X-ray diffraction pattern obtained by XRD, excluding the portion corresponding to the background. In the present invention, CuKα1 radiation is used as the X-ray source in all XRD.

If there are two or more peaks A, the value of I_{A} of at least one of the two or more peaks may satisfy the above-mentioned predetermined ratio. It is preferable that the value of I_{A} of the peak having the largest intensity of the two or more peaks should satisfy the above-mentioned predetermined ratio, and it is more preferable that all values of I_{A} of the two or more peaks should satisfy the above-mentioned predetermined ratio. The same applies to I_{B}, Ic, and I_{M}.

The solid electrolyte of the present invention preferably has a crystalline phase with an argyrodite-type crystal structure, and preferably contains a substance that exhibits the peaks A, B, and C, as described above. Furthermore, the solid electrolyte preferably does not have a crystalline phase with another crystal structure, or preferably has a crystalline phase with another crystal structure in a smaller amount, if any. For example, a peak may be exhibited in the range of 2θ = 32.0° to 35.3° in an X-ray diffraction pattern obtained by XRD, which is referred to as the peak D, and the peak D is not assigned to the argyrodite-type crystal structure. Solid electrolytes that exhibits the peak D tend to have lower lithium ionic conductivity than those that do not exhibit the peak D. Accordingly, in view of increasing the lithium ionic conductivity of the solid electrolyte, the crystalline phases in the solid electrolyte is preferably controlled such that the ratio of I_{D} to I_{M}, I_{D}/I_{M}, is less than 0.21, wherein I_{D} represents the intensity of the peak D. The ratio I_{D}/I_{M} is more preferably 0.18 or less, and even more preferably 0.16 or less. A smaller value of the ratio I_{D}/I_{M} is more advantageous in view of improving the lithium ionic conductivity, and the ratio I_{D}/I_{M} may be more than 0, but is ideally zero.

In addition to the peak D, the solid electrolyte of the present invention may exhibit a peak in the range of 2θ = 28.6° to 29.6° (peak E). The peak E is not assigned to the argyrodite-type crystal structure either. Solid electrolytes that exhibit the peak E tend to have lower lithium ionic conductivity than those that do not exhibit the peak E. Accordingly, in view of increasing the lithium ionic conductivity of the solid electrolyte, the crystalline phases in the solid electrolyte is preferably controlled such that, the ratio of I_{E} to I_{M}, I_{E}/I_{M}, is 0.30 or less, wherein I_{E} represents the intensity of the peak E. The ratio I_{E}/I_{M} is more preferably 0.28 or less, even more preferably 0.25 or less, even more preferably 0.16 or less, and even more preferably 0.13 or less. A smaller value of the ratio I_{E}/I_{M} is more advantageous in view of improving the lithium ionic conductivity, and the ratio I_{E}/I_{M} is ideally zero.

Although it is not clear what kind of substance the peaks D and E are assigned to, the inventor of the present invention believes that these peaks may be assigned to lithium halide that is used as a starting material to produce the solid electrolyte of the present invention and has not completely dissolved to remain in the argyrodite-type crystal structure.

The solid electrolyte of the present invention contains elemental lithium (Li), elemental phosphorus (P), elemental sulfur (S), and elemental halogen (X), and optionally elemental oxygen (O), as described above, and, furthermore, the solid electrolyte may contain another element in addition to these elements. For example, the elemental lithium (Li) may be partially replaced by other elemental alkali metals, the elemental phosphorus (P) may be partially replaced by other elemental pnictogens, or the elemental sulfur (S) may be partially replaced by other elemental chalcogens.

The solid electrolyte of the present invention may contain unavoidable impurities in addition to the elemental lithium (Li), the elemental phosphorus (P), the elemental sulfur (S), the elemental halogen (X), and the elemental oxygen (O), as long as the impurities do not impair the effects of the present invention. The amount of unavoidable impurities contained in the solid electrolyte may be at most less than 5 mol%, preferably less than 3 mol%, and more preferably less than 1 mol%, for example, in order to ensure that the impurities have little effect on the performance of the solid electrolyte.

The solid electrolyte of the present invention has lithium ionic conductivity in a solid state. The solid electrolyte preferably has a lithium ionic conductivity of 0.5 mS/cm or more, more preferably 1.5 mS/cm or more, and even more preferably 2.5 mS/cm or more, at room temperature, i.e., 25°C. The lithium ionic conductivity can be measured using a method described in "Examples", which will be described later.

Next, a preferred method for producing the solid electrolyte of the present invention will be described. In the present invention, the method for producing a solid electrolyte includes a step of preparing a starting material composition containing at least elemental lithium (Li), elemental phosphorus (P), elemental sulfur (S), elemental halogen (X), and elemental oxygen (O), and a step of firing the starting material composition.

The solid electrolyte is preferably produced through a solid state reaction caused by firing the starting material composition containing predetermined elements. The starting material composition can be obtained by mixing the predetermined starting materials. The starting materials are substances containing the elements that is to constitute the solid electrolyte, and more specifically, a compound containing elemental lithium (Li), a compound containing elemental sulfur (S), a compound containing elemental phosphorus (P), a compound containing elemental halogen (X), and a compound containing elemental oxygen (O).

Examples of the compound containing elemental lithium (Li) include lithium compounds such as lithium sulfide (Li₂S), lithium oxide (Li₂O), and lithium carbonate (Li₂CO₃), and lithium metal alone.

Examples of the compound containing elemental sulfur (S) include phosphorus sulfides such as phosphorus trisulfide (P₂S₃) and phosphorus pentasulfide (P₂S₅). In addition, sulfur (S) alone can also be used as the compound containing elemental sulfur (S).

Examples of the compound containing elemental phosphorus (P) include phosphorus sulfides such as phosphorus trisulfide (P₂S₃) and phosphorus pentasulfide (P₂S₅), phosphorus compounds such as sodium phosphate (Na₃PO₄), and phosphorus alone.

Examples of the compound containing the elemental X (halogen) include compounds constituted by one or more elements selected from the group consisting of elemental fluorine (F), elemental chlorine (Cl), elemental bromine (Br), and elemental iodine (I) and one or more elements selected from the group consisting of elemental sodium (Na), elemental lithium (Li), elemental boron (B), elemental aluminum (Al), elemental silicon (Si), elemental phosphorus (P), elemental sulfur (S), elemental germanium (Ge), elemental arsenic (As), elemental selenium (Se), elemental tin (Sn), elemental antimony (Sb), elemental tellurium (Te), elemental lead (Pb), and elemental bismuth (Bi); and oxygen or sulfur may be optionally bonded to such compounds. More specifically, examples of the compound containing the elemental halogen include lithium halides such as LiF, LiCl, LiBr, and Lil, phosphorus halides such as PF₃, PF₅, PCl₃, PCl₅, POCl₃, PBr₃, POBr₃, Pl₃, P₂Cl₄, and P₂I₄, sulfur halides such as SF₂, SF₄, SF₆, S₂F₁₀, SCl₂, S₂Cl₂, and S₂Br₂, sodium halides such as Nal, NaF, NaCl, and NaBr, and boron halides such as BCl₃, BBr₃, and Bl₃. These compounds may be used singly, or two or more thereof may be used in combination. Above all, a lithium halide (LiX, where X represents halogen) is preferably used.

Examples of the compound containing elemental oxygen (O) include the above-mentioned lithium oxide (Li₂O), lithium carbonate (Li₂CO₃), and sodium phosphate (Na₃PO₄), and POCl₃.

As a device for mixing the above-mentioned starting materials, an attritor, a paint shaker, a planetary ball mill, a ball mill, a bead mill, a homogenizer, or the like can be used, for example. The amounts of starting materials added when mixing are adjusted as appropriate such that the targeted composition of the solid electrolyte is obtained.

The resulting starting material composition is fired to cause a solid state reaction to obtain a solid electrolyte having a crystalline phase with an argyrodite-type crystal structure. The firing atmosphere can be an inert gas atmosphere such as an argon or nitrogen atmosphere, and a hydrogen sulfide atmosphere, for example. Among these atmospheres, an inert gas atmosphere, which allows oxygen to be easily incorporated into the solid electrolyte, is preferably used in view of obtaining a solid electrolyte having the peaks A, B, and C described above.

In view of reliably causing a solid state reaction of the starting material composition, the firing temperature is preferably 300°C or higher, more preferably 350°C or higher, and even more preferably 400°C or higher, for example. On the other hand, in view of industrial productivity and economic efficiency, the firing temperature is preferably 700°C or lower, more preferably 600°C or lower, and even more preferably 550°C or lower, for example.

The firing time is not critical and may be any length of time as long as the targeted composition of the solid electrolyte is obtained. Specifically, it is preferable that the firing time should be sufficient to cause sufficient solid state reaction of the starting material composition. The firing time may be 30 minutes or longer, 2 hours or longer, or 3 hours or longer, for example. On the other hand, the firing time may be 10 hours or shorter, or 5 hours or shorter, for example.

After the firing, the fired product may be crushed or pulverized as necessary, and may furthermore be classified as necessary. For example, it is preferable to pulverize or crush the fired product using a pulverizer such as a planetary ball mill, a vibration mill, or a tumbling mill, or a kneader.

The solid electrolyte obtained in this manner can be used alone or in a combination with another solid electrolyte. The D₅₀ of the solid electrolyte is preferably from 0.1 to 250 µm as determined in the volume-weighted particle size distribution obtained by a laser diffraction scattering particle size distribution analysis. When the D₅₀ of the solid electrolyte is 0.1 µm or more, an excessive increase in the surface area of the solid electrolyte can be suppressed to thereby suppress an increase in resistance, and also, the mixing of the solid electrolyte with an active material can be facilitated. On the other hand, when the D₅₀ of the solid electrolyte is 250 µm or less, closest packing of the two solid electrolytes is likely to be achieved in the case where the solid electrolyte of the present invention is used in a combination with another solid electrolyte, for example. Accordingly, the number of contact points between the solid electrolyte particles and the contact area therebetween increase, and the lithium ionic conductivity can thus be improved. In view of these points, the D₅₀ of the solid electrolyte is preferably 0.3 µm or more, and more preferably 0.5 µm or more, for example. On the other hand, the D₅₀ of the solid electrolyte is preferably 150 µm or less, more preferably 70 µm or less, and even more preferably 50 µm or less, for example.

The solid electrolyte of the present invention can be used as a material for a solid electrolyte layer, a positive electrode layer, or a negative electrode layer. Specifically, the solid electrolyte of the present invention can be used for a battery that has a positive electrode layer, a negative electrode layer, and a solid electrolyte layer interposed between the positive electrode layer and the negative electrode layer. That is to say, the solid electrolyte can be used in a so-called solid-state battery. More specifically, the solid electrolyte can be used for a lithium solid-state battery. The lithium solid-state battery may be a primary battery or a secondary battery. There is no particular limitation on the shape of the battery, and, for example, the battery may be a laminate-type battery, a cylindrical battery, a rectangular battery, or the like. The term "solid-state battery" encompasses a solid-state battery that does not contain any liquid material or gel material as the electrolyte, and also encompasses a battery that contains a liquid material or a gel material as the electrolyte in an amount of, for example, 50 mass% or less, 30 mass% or less, or 10 mass% or less.

In the case where the solid electrolyte of the present invention is contained in a solid electrolyte layer, the solid electrolyte layer can be produced by, for example, forming a coating film on a substrate by using a slurry containing the solid electrolyte, a binder, and a solvent, and then removing the solvent from the coating film by heat drying. The coating film may be formed by dripping the slurry onto the substrate, and leveling off the dripped slurry with a doctor blade or the like, or the coating film may also be formed by bringing the substrate and the slurry into contact with each other, followed by cutting with an air knife, or formed by a screen printing method. Alternatively, the solid electrolyte layer can also be produced by forming the solid electrolyte in powder form into a green compact by pressing or the like, and then appropriately processing the green compact.

Typically, the thickness of the solid electrolyte layer is preferably from 5 to 300 µm, and more preferably from 10 to 100 µm, in view of the balance between the prevention of short circuit and the volumetric capacity density.

The solid electrolyte of the present invention can be used in a combination with an active material to prepare an electrode material mixture. The content of the solid electrolyte in the electrode material mixture is typically from 10 to 50 mass%. The electrode material mixture may also contain other materials such as a conductive aid and a binder when necessary. A positive electrode layer and a negative electrode layer can be formed by mixing the electrode material mixture and a solvent to prepare a paste, applying the paste onto a current collector such as aluminum foil, and drying the applied paste.

As a positive electrode material for the positive electrode layer, positive electrode materials that are used as positive electrode active materials for lithium secondary batteries can be used as appropriate. Examples of the positive electrode material include positive electrode active materials containing lithium, or more specifically, a spinel-type lithium transition metal oxide, and a lithium metal oxide having a layered structure. The energy density can be increased by using a high-voltage positive electrode material as the positive electrode material. In addition to the positive electrode active material, the positive electrode material may contain a conductive material or other materials.

As a negative electrode material for the negative electrode layer, negative electrode materials that are used as negative electrode active materials for lithium ion batteries can be used as appropriate. The solid electrolyte of the present invention is electrochemically stable, and therefore, the negative electrode material may be lithium metal, or a material that charges and discharges at a low potential (about 0.1 V vs. Li⁺/Li) comparable to lithium metal, including carbon materials such as graphite, artificial graphite, natural graphite, and non-graphitizable carbon (hard carbon). The energy density of the solid-state battery can be significantly increased in this manner. Furthermore, silicon or tin, which are promising as high-capacity materials, can also be used as the active material. As a battery that includes a common electrolytic solution is charged and discharged, the electrolytic solution reacts with an active material, causing corrosion on the surface of the active material, and thus, the battery characteristics markedly deteriorate. By contrast, in a battery that includes the solid electrolyte of the present invention instead of the electrolytic solution, and silicon or tin as the negative electrode active material, the above-described corrosion reaction does not occur, and the durability of the battery can be improved accordingly. The negative electrode material may also contain a conductive material or other materials, in addition to the negative electrode active material.

### Examples

Hereinafter, the present invention will be described in greater detail by way of examples. However, the scope of the present invention is not limited to the examples below. In the following description, "%" means "mass%" unless otherwise specified.

### Example 1

A lithium sulfide (Li₂S) powder, a lithium oxide (Li₂O) powder, a phosphorus pentasulfide (P₂S₅) powder, a lithium chloride (LiCl) powder, and a lithium bromide (LiBr) powder were weighed according to the preparation composition shown in Table 1 below such that the total amount of the powders was 5 g. A slurry was prepared by adding 10 mL of heptane to these powders. The slurry was placed in a planetary ball mill. ZrO₂ balls having a diameter of 10 mm were used as milling media. The ball mill was operated at 100 rpm for 10 hours for mixing. The resulting mixture was fired in an argon atmosphere at 500°C for 4 hours, to thereby obtain a solid electrolyte. The lithium ionic conductivity of the solid electrolyte was measured as in "Evaluation 4" described later and, as a result, found to be 3.6 mS/cm.

### Examples 2 to 4

Solid electrolytes were obtained in the same manner as in Example 1, except that a lithium sulfide (Li₂S) powder, a lithium oxide (Li₂O) powder, a phosphorus pentasulfide (P₂S₅) powder, a lithium chloride (LiCl) powder, and a lithium bromide (LiBr) powder were mixed according to the preparation compositions shown in Table 1 below. The lithium ionic conductivities of the solid electrolytes were measured as in "Evaluation 4" described later and, as a result, found to be 3.8, 3.4, and 2.9 mS/cm in Examples 2, 3, and 4, respectively.

### Comparative Example 1

A solid electrolyte was obtained in the same manner as in Example 1, except that a lithium oxide (Li₂O) powder was not used and that a lithium sulfide (Li₂S) powder, a phosphorus pentasulfide (P₂S₅) powder, a lithium chloride (LiCl) powder, and a lithium bromide (LiBr) powder were mixed according to the preparation composition shown in Table 1 below. The lithium ionic conductivity of the solid electrolyte was measured as in "Evaluation 4" described later and, as a result, found to be 3.1 mS/cm.

### Comparative Example 2

In this comparative example, a solid electrolyte corresponding to the solid electrolyte of Non-Patent Literature 1 was produced.

Specifically, a solid electrolyte was obtained in the same manner as in Example 1, except that a lithium sulfide (Li₂S) powder, a lithium oxide (Li₂O) powder, a phosphorus pentasulfide (P₂S₅) powder, and a lithium bromide (LiBr) powder were mixed according to the preparation composition shown in Table 1 below. The lithium ionic conductivity of the solid electrolyte was measured as in "Evaluation 4" described later and, as a result, found to be 1.1 mS/cm.

### Comparative Example 3

In this comparative example, a solid electrolyte with a high molar ratio X/P was produced.

Specifically, a solid electrolyte was obtained in the same manner as in Example 1, except that lithium sulfide (Li₂S) powder, a lithium oxide (Li₂O) powder, a phosphorus pentasulfide (P₂S₅) powder, a lithium chloride (LiCl) powder, and a lithium bromide (LiBr) powder were mixed according to the preparation composition shown in Table 1. The lithium ionic conductivity of the solid electrolyte was measured as in "Evaluation 4" described later and, as a result, found to be 1.8 mS/cm.

### Comparative Example 4

In this comparative example, a solid electrolyte with a low molar ratio X/P was produced.

Specifically, a solid electrolyte was obtained in the same manner as in Example 1, except that a lithium sulfide (Li₂S) powder, a lithium oxide (Li₂O) powder, a phosphorus pentasulfide (P₂S₅) powder, a lithium chloride (LiCl) powder, and a lithium bromide (LiBr) powder were mixed according to the preparation composition shown in Table 1 below The lithium ionic conductivity of the solid electrolyte was measured as in "Evaluation 4" described later and, as a result, found to be 1.0 mS/cm.

### Evaluation 1

The solid electrolytes obtained in the examples and the comparative examples were analyzed by ICP optical emission spectroscopy and inert gas fusion-infrared absorption method, and the mole ratios X/P and O/P were calculated. Table 1 shows the results.

The molar quantities of P and X were calculated from the results of the ICP optical emission spectroscopy. The details of the ICP optical emission spectroscopy are as follows.

A solid electrolyte powder was weighed in an argon atmosphere. An alkali solvent (sodium peroxide) was added to the powder to obtain an alkali fused sample. The fused sample was dissolved in water, and then diluted by adding acid (nitric acid) as appropriate to obtain a measurement solution. The molar quantities of P and X in the solution were measured using a sequential ICP-OES apparatus (SPS3500DD manufactured by Hitachi High-Tech Science Corporation).

Solutions for calibration curves were prepared by using a 1000 mg/L standard phosphorus solution for ICP technique and 1000 mg/L chlorine and bromine standard solutions for ion chromatography. The analysis was made in duplicate for each sample, and the averages of the two found values were used to determine the ratios of the elements.

The molar quantity of O was determined and calculated using inert gas fusion-infrared absorption method. The details of inert gas fusion-infrared absorption method are as follows.

A solid electrolyte powder was weighed in an argon atmosphere and collected in a nickel capsule for gas analysis. The nickel capsule was sealed such that the powder was not exposed to outside air, and the capsule was mounted on an oxygen-nitrogen-hydrogen analyzer (EMGA930 manufactured by Horiba, Ltd.) equipped with a desulfurization mechanism to measure the molar quantity of O. For the measurement, a metallic auxiliary agent (nickel) was added to perform desulfurization.

The measurement was made in duplicate for each sample, and the average of the two found values was used to determine the ratio of oxygen.

### Evaluation 2

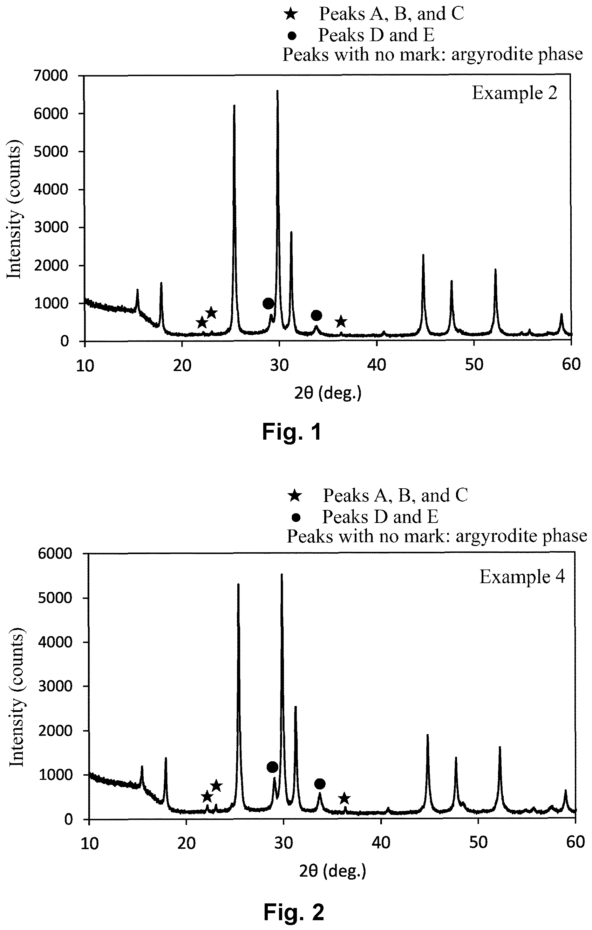

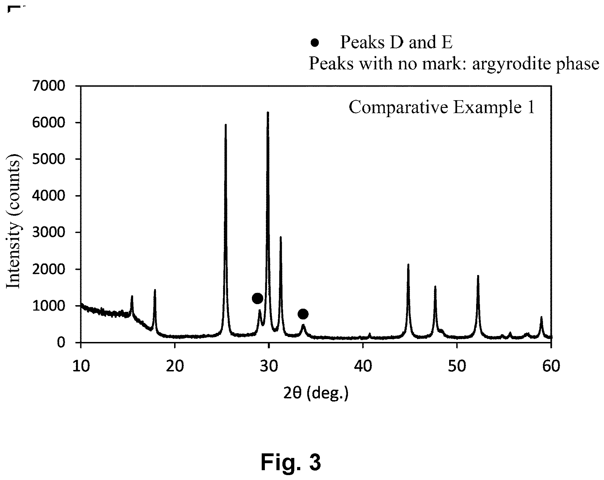

The solid electrolytes obtained in the examples and the comparative examples were subjected to XRD, and the values of I_{A}/I_{M}, I_{B}/I_{M}, I_{C}/I_{M}, I_{D}/I_{M}, and I_{E}/I_{M} were calculated. Table 1 shows the results. Furthermore, the X-ray diffraction patterns of Examples 2 and 4 and Comparative Example 1 are shown in Figs. 1, 2, and 3, respectively.

The XRD was performed using an X-ray diffractometer "Smart Lab" manufactured by Rigaku Corporation. The conditions for analysis were as follows: no atmospheric exposure; scan axis: 2θ/θ; scan range: from 10° to 140°; step width: 0.01°; and scan speed: 2°/min. CuKα1 radiation using a Johansson type crystal was used as the X-ray source. A one-dimensional detector was used for the detection. The XRD was performed such that the intensity at 21.3 ± 1.0° was from 100 to 700 counts and that the maximum peak intensity within the range from 10° to 140° was 1000 counts or more. The peak intensities were calculated using a "PDXL" (software program manufactured by Rigaku Corporation). Automatic data processing was performed, and the calculation was performed by reading the integral intensity of a peak corresponding to each angular range from the obtained peak list. The processing was performed under the initial setting conditions, except that σ cutoff for peak search was 3.0.

### Evaluation 3

Solid lithium secondary batteries were produced by using the solid electrolytes obtained in the examples and the comparative examples. The DC resistance of the batteries was measured using the following method. The details of the method for producing a battery and the method for measuring the DC resistance are as described below. The solid electrolytes were pulverized as appropriate before using for the battery production such that the D₅₀ thereof was 1 µm or less in a volume-weighted particle size distribution as measured by a laser diffraction scattering particle size distribution analysis.

### (1) Preparation of Negative Electrode Material Mixture Powder

A negative electrode material mixture powder was prepared by mixing graphite as a negative electrode active material powder and a solid electrolyte powder in a mortar at a mass ratio of 64:36. The D₅₀ of graphite was 20 µm in the volume-weighted particle size distribution.

### (2) Production of Negative Electrode

The thus produced negative electrode material mixture powder was uniaxially pressed at 10 MPa to form a negative electrode pellet.

### (3) Preparation of Positive Electrode Material Mixture Powder

A positive electrode material mixture powder was prepared by mixing a positive electrode active material powder, a solid electrolyte powder, and a conductive agent (VGCF (registered trademark)) powder in a mortar at a mass ratio of 60:37:3. NCM523 was used as the positive electrode active material powder. NCM523 is a powder of the composition formula: LiNi_{0.5}Co_{0.2}Mn_{0.3}O₂. The D₅₀ of NCM523 was 2 µm in the volume-weighted particle size distribution.

### (4) Production of Solid-State Battery

A ceramic cylinder (opening diameter 10 mm) with openings at the upper and lower ends was provided, and the lower opening was closed with an electrode made of SUS. Into the cylinder in that state, 0.05 g of solid electrolyte was poured. The upper opening was held with an electrode, and uniaxial pressing was performed at 10 MPa to form an electrolyte layer. The upper electrode was temporarily removed, the positive electrode material mixture was poured over the electrolyte layer and smoothed flat, followed by reattaching the upper electrode, and uniaxial pressing was performed at 42 MPa to bond the positive electrode layer and the electrolyte layer to each other. The lower electrode was temporarily removed, the negative electrode pellet was inserted, followed by reattaching the lower electrode, and the upper electrode and lower electrodes were screwed together in four points with a torque pressure of 6 N·m, to produce a solid-state battery equivalent to 1 mAh. The above production of the solid-state battery was conducted in a glove box purged with dry air with an average dew point of -70°C.

### (5) Measurement of DC Resistance

The solid-state battery was set in a charging/discharging apparatus conditioned to have an environment temperature of 25°C and allowed to stand until the battery temperature reached the environment temperature.

The battery was charged and discharged with 1 mA as 1 C. First, constant-current constant-voltage charging was performed at 0.1 C up to 4.5 V, to obtain the initial charge capacity. Next, constant-current discharging was performed at 0.1 C up to 2.5 V to obtain the initial discharge capacity. From the values of the initial charge capacity and the initial discharge capacity, it was confirmed that the battery was operating as a solid-state battery.

Next, two cycles of charging and discharging were performed, in which the one cycle included constant-current constant-voltage charging at 0.1 C up to 4.5 V and constant-current discharging at 0.1 C up to 2.5 V.

Lastly, constant-current constant-voltage charging was performed at 0.2 C up to 3.7 V, and then DC resistance (DC-IR) was measured. The conditions for the DC resistance (DC-IR) measurement were as follows: measurement current 5 mA, and measurement time 10 seconds. Table 1 shows the DC resistance values.

### Evaluation 4

The lithium ionic conductivities of the solid electrolytes obtained in the examples and the comparative examples were measured using the following method.

Each solid electrolyte was uniaxially pressed under an load of about 6 t/cm² in a glove box purged with a sufficiently dried argon gas (dew point: -60°C or less), to thereby produce a pellet with a diameter of 10 mm and a thickness of about 1 to 8 mm as a sample for measurement of the lithium ionic conductivity. The measurement of the lithium ionic conductivity was performed using a Solartron 1255B manufactured by Toyo Corporation. The measurement was performed by an AC impedance method under the following conditions: temperature 25°C, frequency 100 Hz to 1 MHz, and amplitude 100 mV.

**Table 1**

| | Preparation composition | Molar ratio (X/P) | Molar ratio (O/P) | I_{A}/I_{M} | I_{B}/I_{M} | I_{C}/I_{M} | I_{D}/I_{M} | I_{E}/I_{M} | DC resistance (Ω) |
|---|---|---|---|---|---|---|---|---|---|
| Ex. 1 | Li_{5.4}PS_{4.35}O_{0.05}Cl_{0.8}Br_{0.8} | 1.52 | 0.19 | 0.006 | 0.003 | 0.002 | 0.045 | 0.100 | 560 |
| Ex. 2 | L_{15.4}PS_{4.3}O_{0.1}Cl_{0.8}Br_{0.8} | 1.49 | 0.26 | 0.009 | 0.010 | 0.005 | 0.089 | 0.121 | 517 |
| Ex. 3 | Li_{5.4}PS_{4.2}O_{0.2}Cl_{0.8}Br_{0.8} | 1.51 | 0.30 | 0.010 | 0.008 | 0.007 | 0.098 | 0.127 | 532 |
| Ex. 4 | Li_{5.4}PS_{4.0}O_{0.4}Cl_{0.8}Br_{0.8} | 1.51 | 0.37 | 0.017 | 0.012 | 0.009 | 0.136 | 0.192 | 532 |
| Com. Ex. 1 | Li_{5.4}PS_{4.4}Cl_{0.8}Br_{0.8} | 1.51 | 0.11 | 0.000 | 0.000 | 0.000 | 0.080 | 0.177 | 622 |
| Com. Ex. 2 | Li_{6.0}PS_{4.7}O_{0.3}Br | 0.96 | 0.29 | 0.021 | 0.011 | 0.018 | 0.028 | 0.045 | 710 |
| Com. Ex. 3 | Li_{5.4}PS_{3.8}0_{0.6}Cl_{0.8}Br_{0.8} | 1.51 | 0.51 | 0.031 | 0.027 | 0.014 | 0.212 | 0.319 | 852 |
| Com. Ex. 4 | Li_{6.0}PS_{4.7}O_{0.3}Cl_{0.5}Br_{0.5} | 0.94 | 0.28 | 0.026 | 0.024 | 0.009 | 0.000 | 0.000 | 690 |

The preparation compositions shown in Table 1 are compositions assuming that elemental oxygen (O) substitutes elemental sulfur (S) in the argyrodite-type crystal structure.

As can be clearly seen from the results shown in Table 1, the DC resistances of batteries including the solid electrolytes obtained in the examples can be lower than those including the solid electrolytes obtained in the comparative examples.

Furthermore, as shown in Figs. 1 and 2, it was confirmed that the solid electrolytes obtained in Examples 2 and 4 each had a crystalline phase with the argyrodite-type crystal structure. It was also confirmed that the solid electrolytes obtained in Examples 1 and 3 each had a crystalline phase with the argyrodite-type crystal structure and a crystalline phase exhibiting the peaks A, B, and C (not shown in Figures), as in the solid electrolytes obtained in Example 2 and 4.

### Industrial Applicability

The present invention provides a solid electrolyte that has the lithium ionic conductivity and is also capable of exhibiting excellent battery characteristics when used for a solid-state battery.

## Claims

1. A solid electrolyte comprising at least elemental lithium (Li), elemental phosphorus (P), elemental sulfur (S), elemental halogen (X), and elemental oxygen (O),
wherein the solid electrolyte has a crystalline phase with an argyrodite-type crystal structure,
a molar ratio of the elemental halogen (X) to the elemental phosphorus (P), X/P, is more than 1.0 and less than 2.4,
a molar ratio of the elemental oxygen (O) to the elemental phosphorus (P), O/P, is more than 0 and less than 0.5, and
in an X-ray diffraction pattern, the solid electrolyte exhibits:
peak A in a range of 2θ = 21.6° to 22.6°;
peak B in a range of 2θ = 22.7° to 23.7°; and
peak C in a range of 2θ = 35.8° to 36.8°,
the X-ray diffraction pattern being obtained by an X-ray diffractometer using CuKα1 radiation.

2. The solid electrolyte according to claim 1,
wherein the solid electrolyte exhibits peak M in a range of 2θ = 24.2° to 26.2° in an X-ray diffraction pattern obtained by an X-ray diffractometer using CuKα1 radiation, and
a ratio of I_{A} to I_{M}, I_{A}/I_{M}, is more than 0 and less than 0.03, wherein I_{A} represents an intensity of the peak A and I_{M} represents an intensity of the peak M.

3. The solid electrolyte according to claim 1 or 2,
wherein the solid electrolyte exhibits peak M in a range of 2θ = 24.2° to 26.2° in an X-ray diffraction pattern obtained by an X-ray diffractometer using CuKα1 radiation, and
a ratio of I_{B} to I_{M}, I_{B}/I_{M}, is more than 0 and 0.025 or less, wherein I_{B} represents an intensity of the peak B and I_{M} represents an intensity of the peak M.

4. The solid electrolyte according to any one of claims 1 to 3,
wherein the solid electrolyte exhibits peak M in a range of 2θ = 24.2° to 26.2° in an X-ray diffraction pattern obtained by an X-ray diffractometer using CuKα1 radiation, and
a ratio of Ic to I_{M}, I_{C}/I_{M}, is more than 0 and 0.012 or less, wherein Ic represents an intensity of the peak C and I_{M} represents an intensity of the peak M.

5. The solid electrolyte according to any one of claims 1 to 4, wherein in an X-ray diffraction pattern, the solid electrolyte exhibits:
peak D in a range of 2θ = 32.0° to 35.3°; and
peak M in a range of 2θ = 24.2° to 26.2°
the X-ray diffraction pattern being obtained by an X-ray diffractometer using CuKα1 radiation, and
a ratio of I_{D} to I_{M}, I_{D}/I_{M}, is less than 0.21, wherein I_{D} represents an intensity of the peak D and I_{M} represents an intensity of the peak M.

6. An electrode material mixture comprising the solid electrolyte according to any one of claims 1 to 5 and an active material.

7. A battery comprising a positive electrode layer, a negative electrode layer, and a solid electrolyte layer interposed between the positive electrode layer and the negative electrode layer, wherein the battery contains the solid electrolyte according to any one of claims 1 to 5.
